# EUROPÄISCHE PATENTSCHRIFT

(11) **EP 2 480 505 B1**
(45) Veröffentlichungstag und Bekanntmachung des Hinweises auf die Patenterteilung: **26.07.2017**
(21) Anmeldenummer: 10757101.0
(22) Anmeldetag: 23.09.2010
(51) Int. Cl.: C02F 3/12

(54) **VORRICHTUNG ZUM REINIGEN VON ABWASSER**
DEVICE FOR CLEANING WASTEWATER
DISPOSITIF D'ÉPURATION DES EAUX USÉES

(30) Priorität: 23.09.2009 DE 102009044918
(43) Veröffentlichungstag der Anmeldung: 01.08.2012
(73) Patentinhaber: INVENT Umwelt- und Verfahrenstechnik AG, 91058 Erlangen (DE)
(72) Erfinder: DURST, Franz, 91094 Langensendelbach (DE); HÖFKEN, Marcus, 91054 Erlangen (DE)
(74) Vertreter: Dr. Gassner & Partner mbB
(86) Internationale Anmeldenummer: PCT/EP2010/064076
(87) Internationale Veröffentlichungsnummer: WO 2011/036221

(56) Entgegenhaltungen:
- DE-A1- 1 932 640
- DE-A1- 2 147 080
- FR-A- 1 494 983
- GB-A- 205 597
- US-A- 5 041 217
- US-A- 5 451 317
- US-A1- 2008 053 898

## Beschreibung

Die Erfindung betrifft eine Vorrichtung zum Reinigen von Abwasser nach dem Oberbegriff des Anspruchs 1.

Eine solche Vorrichtung ist aus der DE-OS-1 932 640 bekannt. Dabei ist in einem Umlaufbecken ein Horizontalrührwerk angeordnet, dessen Propeller von einem Rohrstück umgeben ist. Der Durchmesser des Propellers entspricht etwa dem Durchmesser des Rohrstücks, so dass Wirbelverluste niedrig gehalten werden und die durch den Propeller erzeugte Strömung gerichtet wird. Die DE-OS-2 147 080 beschreibt ein ähnliches Horizontalrührwerk, bei dem der Propeller wiederum von einem Rohrstück umgeben ist. - Die Erzeugung einer umlaufenden Strömung mittels herkömmlicher Horizontalrührwerke erfordert einen relativ hohen Energieaufwand.

Aus der US5451317A ist eine Vorrichtung zum Reinigen von Abwasser bekannt, mit einem Behandlungsbecken, wobei im Behandlungsbecken zumindest ein umlaufender Strömungskanal mit einem Boden und zwei einander gegenüberliegenden Wänden vorgesehen ist, wobei im Strömungskanal zumindest ein horizontales Rührwerk angeordnet ist, und wobei eine senkrecht zu einer Strömungsrichtung verlaufende Querschnittsfläche des Strömungskanals sich stromauf- und stromabwärts des Horizontalrührwerks vergrößert, wobei sich die Querschnittsfläche stromauf- und stromabwärts des Horizontalrührwerks bis zu einem vorgegebenen Abstand vom Horizontalrührwerk stetig vergrößert, wobei die Vergrößerung der Querschnittsfläche durch eine in den Strömungskanal gerichtete Wölbung gebildet ist, welche an zumindest einer Wand und/oder dem Boden des Strömungskanals vorgesehen ist, und wobei das Horizontalrührwerk im Bereich eines durch die zumindest eine Wölbung gebildeten Minimums der Querschnittsfläche des Strömungskanals angeordnet ist.

Aufgabe der Erfindung ist es, die Nachteile nach dem Stand der Technik zu beseitigen. Es soll insbesondere eine Vorrichtung angegeben werden, mit der bei verringertem Energieaufwand eine umlaufende Strömung in einem Behandlungsbecken zum Reinigen von Abwasser erzeugbar ist. Dabei soll die Vorrichtung möglichst einfach und kostengünstig herstellbar sein. Diese Aufgabe wird durch die Merkmale des Anspruchs 1 gelöst.

Zweckmäßige Ausgestaltungen der Erfindung ergeben sich aus den Merkmalen der Ansprüche 2 bis 7.

Nach Maßgabe der Erfindung wird vorgeschlagen, dass sich die Querschnittsfläche stromauf- und stromabwärts des Horizontalrührwerks bis zu einem vorgegebenen Abstand vom Horizontalrührwerk stetig vergrößert, dass die Vergrößerung der Querschnittsfläche durch eine in den Strömungskanal gerichtete Wölbung gebildet ist, welche an zumindest einer Wand und/oder am Boden des Strömungskanals vorgesehen ist, und dass das Horizontalrührwerk sich im Bereich eines durch die zumindest eine Wölbung gebildeten Minimums der Querschnittsfläche des Strömungskanals angeordnet ist. - In Abkehr vom Stand der Technik weist die Querschnittsfläche des Strömungskanals ein Minimum auf. In diesem Bereich ist das Horizontalrührwerk angeordnet. Damit kann in überraschend einfacher und kostengünstiger Weise der Energieaufwand zum Betreiben des Horizontalrührwerks verringert werden.

Es wird angenommen, dass die Verminderung des Energieaufwands bei der erfindungsgemäßen Vorrichtung wie folgt zu erklären ist: Beim Betrieb eines Horizontalrührwerks in einem herkömmlichen Strömungskanal mit in Strömungsrichtung konstanter Querschnittsfläche bildet sich durch einen vom Horizontalrührwerk erzeugten Sog an der Oberfläche des Abwassers oberhalb des Horizontalrührwerks eine Mulde aus. Die Erzeugung und Aufrechterhaltung dieser Mulde in der Oberfläche des Abwassers verursacht Energieaufwand. Indem nunmehr die Querschnittsfläche im Bereich des Horizontalrührwerks verkleinert wird, kann die Ausbildung dieser Mulde vermieden werden. Infolgedessen kann die Energie zur Erzeugung und Aufrechterhaltung der Mulde eingespart werden. Die Größe und Tiefe der sich ausbildenden Mulde hängen von der Geometrie des Strömungskanals sowie von der Rotationsgeschwindigkeit des Horizontalrührwerks ab. Bei einer gegebenen Geometrie des Strömungskanals sowie einer gegebenen Rotationsgeschwindigkeit des Horizontalrührwerks kann eine geeignete Verjüngung der Querschnittsfläche im Bereich des Horizontalrührwerks eingestellt werden. Die Verjüngung ist relativ gering und ergibt sich aus dem Volumen der zu vermeidenden Mulde an der Oberfläche des Abwassers.

Der vorgegebene Abstand, bis zu dem sich die Wölbung stromauf- und stromabwärts des Horizontalrührwerks erstreckt, ist zweckmäßigerweise gleich. Der Abstand ergibt sich aus der Längserstreckung der Mulde. Abgesehen von der über den Abstand hinweg sich ändernden Querschnittsfläche, kann im Übrigen die Querschnittsfläche im Strömungskanal in herkömmlicher Weise konstant bleiben.

Nach der Erfindung ist bei vorgegebenen Betriebsparametern des Horizontalrührwerks ein erstes Volumen der von der zumindest einen Wand und/oder vom Boden vorspringenden Wölbung/en so gewählt, dass ein zweites Volumen einer durch einen Sog des Horizontalrührwerks sich an einer Oberfläche des Abwassers ausbildenden Mulde kompensiert wird. Durch die Anpassung des durch die Wölbung/en verursachten ersten Volumens kann ein durch die Mulde gebildetes zweites Volumen vollständig kompensiert und damit eine maximale Energieeinsparung erreicht werden. Unter "Betriebsparametern des Horizontalrührwerks" werden insbesondere die Ausbildung eines Propellers sowie dessen Rotationsgeschwindigkeit verstanden.
Die beiden einander gegenüberliegenden Wände weisen zweckmäßigerweise in symmetrischer Ausbildung jeweils eine Wölbung auf.
Nach einer weiteren Ausgestaltung ist zumindest eine der beiden den Strömungskanal begrenzten Wände eine innerhalb des Behandlungsbeckens vorgesehene Strömungsleitwand. D. h. der Strömungskanal kann durch eine das Behandlungsbecken begrenzende Längswand sowie eine innerhalb des Behandlungsbeckens vorgesehene Strömungsleitwand begrenzt sein. Vorteilhafterweise ist beidseits der Strömungsleitwand jeweils ein Strömungskanal mit zumindest einem darin angeordneten Horizontalrührwerk vorgesehen. In diesem Fall weist jeder der Strömungskanäle die erfindungsgemäße Ausgestaltung der Querschnittsfläche auf.

Die vorgeschlagenen Wölbungen des/der Wand/Wände und/oder des Bodens können beispielsweise durch geeignet geformte Aufdoppelungen oder Einsätze in/an der Wand/den Wänden und/oder dem Boden des Strömungskanals hergestellt werden. Solche Aufdoppelungen oder Einsätze können beispielsweise aus faserverstärktem Kunststoff, Edelstahlblechen oder dgl. hergestellt sein. Mit den Aufdoppelungen oder Einsätzen wird das erste Volumen bereitgestellt. - Selbstverständlich kann der Strömungskanal bei der Herstellung auch so ausgestaltet werden, dass darin die erfindungsgemäß vorgeschlagene Querschnittsverjüngung von vornherein vorgesehen ist. Beispielsweise können bei einem aus Beton hergestellten Strömungskanal dessen Wände von vornherein so gestaltet werden, dass sich die erfindungsgemäße Verjüngung der Querschnittsfläche ergibt.

Nachfolgend werden Ausführungsbeispiele der Erfindung anhand der Zeichnungen näher erläutert. Es zeigen:
- Fig. 1: eine Draufsicht auf eine erste Anordnung und
- Fig. 2: eine teilweise Draufsicht auf eine zweite Anordnung.

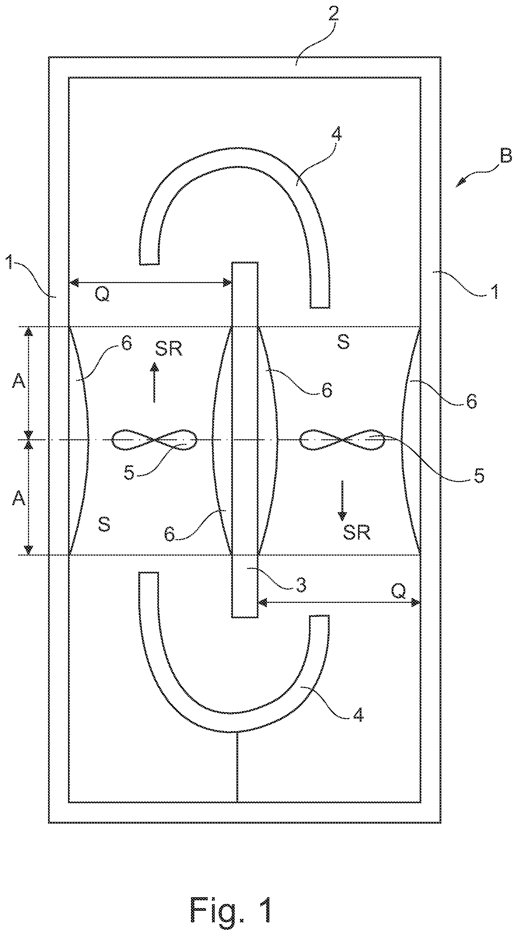

Bei der in Fig. 1 gezeigten ersten Anordnung ist ein rechteckiges Behandlungsbecken B aus zwei einander gegenüberliegenden Längswänden 1 sowie zwei Querwänden 2 gebildet. Im Behandlungsbecken B befindet sich eine im Wesentlichen parallel zu den Längswänden 1 verlaufende erste Strömungsleitwand 3, sowie im Bereich der Enden der ersten Strömungsleitwand 3 angeordnete zweite gebogene Strömungsleitwände 4. Zwischen der ersten Strömungsleitwand 3 und jeder der Längswände 1 ist jeweils ein Strömungskanal S gebildet in dem jeweils ein Horizontalrührwerk 5 aufgenommen ist. Eine durch einen Propeller des Horizontalrührwerks 5 erzeugte Strömungsrichtung SR verläuft etwa parallel zur Längserstreckung des Strömungskanals S. Eine mit dem Bezugszeichen Q angedeutete Querschnittsfläche des Strömungskanals S nimmt jeweils ab einem Abstand A in Richtung des Horizontalrührwerks 5 stetig ab. Ein Minimum der Querschnittsfläche Q befindet sich im Bereich des Horizontalrührwerks 5. Insbesondere ist der Propeller des Horizontalrührwerks 5 im Bereich des Minimums der Querschnittsfläche Q angeordnet. Wie aus Fig. 1 ersichtlich ist, ist die Verminderung der Querschnittsfläche Q durch eine zum Strömungskanal S gerichtete Wölbung 6 gebildet, welche sich jeweils von den Längswänden 1 und der ersten Strömungsleitwand 3 erstreckt. Die Wölbungen 6 sind hier bezüglich einer Mittelebene des Strömungskanals S symmetrisch ausgebildet.

Die Wölbungen 6 können beispielsweise durch geeignet ausgebildete Aufdoppelungen hergestellt werden, welche an den Längswänden 1 und der ersten Strömungsleitwand 3 angebracht werden. Es können auch Einsätze vorgesehen sein, welche in dafür im Bereich der Längswände 1 und/oder der Strömungsleitwand 13 vorgesehene Ausnehmungen eingesetzt werden. Derartige Aufdoppelungen oder Einsätze können beispielsweise aus glasfaserverstärktem Kunststoff, Edelstahlblechen oder dgl. hergestellt sein.

Die Funktion der ersten Anordnung ist Folgende:
Durch die Wirkung der Horizontalrührwerke 5 wird im Behandlungsbecken B aufgenommenes Abwasser umlaufend in Strömungsrichtung SR bewegt. Um ein möglichst strömungswiderstandsfreies Umbiegen der Strömung am Austritt der Strömungskanäle S zu ermöglichen, sind in diesem Bereich zweite Strömungsleitwände 4 vorgesehen. Durch die erfindungsgemäß vorgeschlagenen Wölbungen 6 wird die Querschnittsfläche Q des Strömungskanals S im Bereich des Horizontalrührwerks 5 verringert. Infolgedessen kann das Horizontalrührwerk 5 mit vermindertem Energieeinsatz betrieben werden.

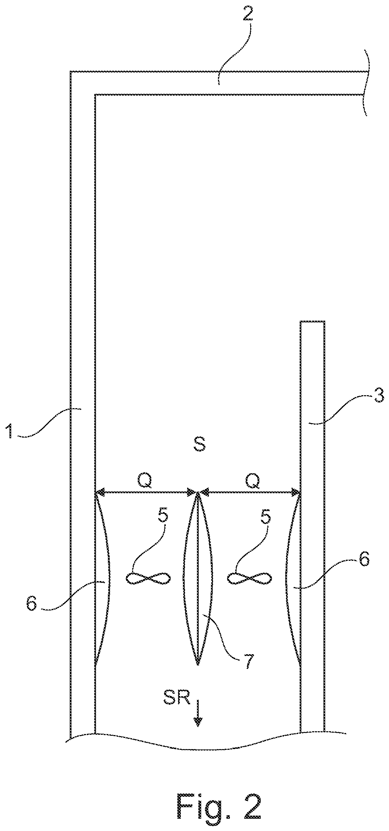

Bei der in Fig. 2 gezeigten zweiten Anordnung sind in einem zwischen der ersten Strömungsleitwand 3 und der ersten Längswand 1 gebildeten Strömungskanal S zwei Horizontalrührwerke 5 vorgesehen. Mit dem Bezugszeichen 7 ist eine weitere Strömungsleitwand bezeichnet, welche den Strömungskanal S in zwei weitere Strömungskanäle S1, S2 unterteilt. Dabei ist auch die weitere Strömungsleitwand 7 im Wesentlichen parallel zur Strömungsrichtung SR ausgerichtet. An der Längswand 1 und der ersten Strömungsleitwand 3 sind wiederum Wölbungen 6 vorgesehen, deren Maximum sich im Bereich der Horizontalrührwerke 5 befindet. Die weitere Strömungsleitwand 7 weist eine zu den Wölbungen 6 im Wesentlichen spiegelbildlich ausgebildete Kontur auf, so dass sich jede Querschnittsfläche Q im Bereich der weiteren Strömungskanäle S1, S2 jeweils bis zu den Horizontalrührwerk 5 stetig verjüngt.

Obwohl in den Ausführungsbeispielen die Verkleinerung der Querschnittsfläche Q in Richtung des Horizontalrührwerks 5 jeweils durch Wölbungen 6 an der Längswand 1, der ersten Strömungsleitwand 3 und/oder der weiteren Strömungsleitwand 7 gezeigt ist, kann eine solche Verkleinerung der Querschnittsfläche Q auch durch andere Maßnahmen erreicht werden. Beispielsweise ist es auch möglich, an einem Boden des Behandlungsbeckens B eine sattelartige Wölbung 6 vorzusehen, deren maximale Höhe im Bereich des Horizontalrührwerks 5 sich befindet.

### Bezugszeichenliste

- 1: Längswand
- 2: Querwand
- 3: erste Strömungsleitwand
- 4: zweite Strömungsleitwand
- 5: Horizontalrührwerk
- 6: Wölbung
- 7: weitere Strömungsleitwand

- A: Abstand
- B: Behandlungsbecken
- Q: Querschnittsfläche
- S: Strömungskanal
- SR: Strömungsrichtung
- S1, S2: weiterer Strömungskanal

## Patentansprüche

1. Verfahren zur Erzeugung einer umlaufenden Strömung in einem Behandlungsbecken zum Reinigen von Abwasser, wobei im Behandlungsbecken (B) zumindest ein umlaufender Strömungskanal (S, S1, S2) mit einem Boden und zwei einander gegenüberliegenden Wänden vorgesehen ist, wobei im Strömungskanal (S, S1, S2) zumindest ein Horizontalrührwerk (5) mit einem Propeller angeordnet ist, und wobei eine senkrecht zu einer Strömungsrichtung (SR) verlaufende Querschnittsfläche (Q) des Strömungskanals (S, S1, S2) sich stromauf- und stromabwärts des Horizontalrührwerks (5) vergrößert,
wobei sich die Querschnittsfläche (Q) stromauf- und stromabwärts des Horizontalrührwerks (5) bis zu einem vorgegebenen Abstand vom Horizontalrührwerk (5) stetig vergrößert,
wobei die Vergrößerung der Querschnittsfläche (Q) durch eine in den Strömungskanal (S, S1, S2) gerichtete Wölbung (6) gebildet ist, welche an zumindest einer Wand und/oder dem Boden des Strömungskanals (S, S1, S2) vorgesehen ist, und
wobei das Horizontalrührwerk (5) im Bereich eines durch die zumindest eine Wölbung (6) gebildeten Minimums der Querschnittsfläche (Q) des Strömungskanals (S, S1, S2) angeordnet ist,
**dadurch gekennzeichnet,**
**dass** bei vorgegebener Geometrie des Strömungskanals (S, S1, S2) sowie bei vorgegebener Rotationsgeschwindigkeit und Ausbildung des Propellers eine Verjüngung der Querschnittsfläche (Q) so eingestellt wird, dass eine Ausbildung einer durch einen Sog des Horizontalrührwerks (5) sich an einer Oberfläche des Abwassers ausbildenden Mulde vermieden wird.

2. Verfahren nach Anspruch 1, wobei die Querschnittsfläche (Q) des Strömungskanals (S, S1, S2) stromauf- und stromabwärts der Wölbung/en (6) etwa gleich ist.

3. Verfahren nach einem der vorhergehenden Ansprüche, wobei beide einander gegenüberliegenden Wände in symmetrischer Ausbildung jeweils eine Wölbung (6) aufweisen.

4. Verfahren nach einem der vorhergehenden Ansprüche, wobei zumindest eine der Wände eine innerhalb des Behandlungsbeckens (B) vorgesehene Strömungsleitwand (3, 7) ist.

5. Verfahren nach einem der vorhergehenden Ansprüche, wobei beiderseits der Strömungsleitwand (3, 7) jeweils ein Strömungskanal (S, S1, S2) mit einem darin angeordneten Horizontalrührwerk (5) vorgesehen ist.

6. Verfahren nach einem der vorhergehenden Ansprüche, wobei die zumindest eine Wölbung (6) in einstückiger Ausbildung mit der Wand oder dem Boden hergestellt ist.

7. Verfahren nach einem der vorhergehenden Ansprüche, wobei die zumindest eine Wölbung (6) durch eine an der Wand oder dem Boden angebrachte Aufdoppelung gebildet ist.

## Claims

1. A method for generating a circulating flow in a treatment basin for cleaning wastewater, wherein at least one circulating flow channel (S, S1, S2), which has a bottom and two walls located opposite each other, is provided in the treatment basin (B), wherein at least one horizontal agitator (5) comprising a propeller is disposed in the flow channel (S, S1, S2), and wherein a cross-sectional area (Q) of the flow channel (S, S1, S2) extending perpendicularly to a flow direction (SR) increases upstream and downstream of the horizontal agitator (5),
wherein the cross-sectional area (Q) increases continuously upstream and downstream of the horizontal agitator (5) up to a specified distance from the horizontal agitator (5),
wherein the increase in the cross-sectional area (Q) is formed by a bulge (6) directed into the flow channel (S, S1, S2), which is provided at at least one wall and/or the bottom of the flow channel (S, S1, S2), and
wherein the horizontal agitator (5) is disposed in the region of a minimum of the cross-sectional area (Q) of the flow channel (S, S1, S2) formed by the at least one bulge (6),
**characterized in that**
with a given geometry of the flow channel (S, S1, S2) and with a specific rotational speed and design of the propeller a tapering of the cross-sectional area (Q) is adjusted such that a formation of a valley at the surface of the wastewater due to an eddy generated by the horizontal agitator (5) is prevented.

2. The method according to claim 1, wherein the cross-sectional area (Q) of the flow channel (S, S1, S2) is approximately equal upstream and downstream of the bulge(s) (6).

3. The method according to any one of the preceding claims, wherein the two walls, which are opposite each other, each comprise a bulge (6) in a symmetrical design.

4. The method according to any one of the preceding claims, wherein at least one of the walls is a flow guide wall (3, 7) provided within the treatment basin (B).

5. The method according to any one of the preceding claims, wherein a flow channel (S, S1, S2) having a horizontal agitator (5) disposed therein is provided on either side of the flow guide wall (3, 7).

6. The method according to any one of the preceding claims, wherein the at least one bulge (6) is produced as one piece with the wall or the bottom.

7. The method according to any one of the preceding claims, wherein the at least one bulge (6) is formed by a lamination mounted at the wall or the bottom.

## Revendications

1. Procédé pour générer un courant circulant dans un bassin de traitement pour l'épuration des eaux usées, en ce qu'au moins un canal d'écoulement périphérique (S, S1, S2) comportant un fond et deux parois opposées est prévu dans le bassin de traitement (B), en ce qu'au moins un agitateur horizontal (5) pourvu d'une hélice est disposé dans le canal d'écoulement (S, S1, S2), et en ce qu'une surface en coupe transversale (Q) perpendiculaire à un sens d'écoulement (SR) du canal d'écoulement (S, S1, S2) s'agrandit en amont et en aval de l'agitateur horizontal (5),
en ce que la surface en coupe transversale (Q) s'agrandit progressivement en amont et en aval de l'agitateur horizontal (5) jusqu'à une distance prédéfinie de l'agitateur horizontal (5),
en ce que l'agrandissement de la surface en coupe transversale (Q) est réalisé par une courbure (6) dirigée dans le canal d'écoulement (S, S1, S2), ladite courbure étant prévue au moins au niveau d'une paroi et /ou du fond du canal d'écoulement (S, S1, S2), et
en ce que l'agitateur horizontal (5) est disposé dans la zone d'un minimum formé par au moins une courbure (6) de la surface en coupe transversale (Q) du canal d'écoulement (S, S1, S2),
**caractérisé en ce qu'**
un rétrécissement de la surface en coupe transversale (Q) à une géométrie prédéfinie du canal d'écoulement (S, S1, S2) ainsi qu'à une vitesse de rotation prédéfinie et configuration de l'hélice est réglé de sorte qu'une formation d'une cavité se formant sur une surface des eaux usées par une succion de l'agitateur horizontal (5) soit évitée.

2. Procédé selon la revendication 1, en ce que la surface en coupe transversale (Q) du canal d'écoulement (S, S1, S2) est approximativement égale en amont et en aval de la/des courbure(s) (6).

3. Procédé selon l'une des revendications précédentes, en ce que les deux parois opposées présentent en configuration symétrique respectivement une courbure (6).

4. Procédé selon l'une des revendications précédentes, en ce qu'au moins l'une des parois est une paroi guide de courant (3, 7) prévue à l'intérieur du bassin de traitement (B).

5. Procédé selon l'une des revendications précédentes, en ce qu'un canal d'écoulement (S, S1, S2) avec un agitateur horizontal (5) disposé à l'intérieur est prévu respectivement des deux côtés de la paroi guide de courant (3, 7).

6. Procédé selon l'une des revendications précédentes, en ce qu'au moins une courbure (6) est réalisée en configuration une pièce avec la paroi ou le fond.

7. Procédé selon l'une des revendications précédentes, en ce qu'au moins une courbure (6) est formée par un doublage rapporté sur la paroi ou le fond.
